# EUROPÄISCHE PATENTSCHRIFT

(11) **EP 1 538 287 B1**
(45) Veröffentlichungstag und Bekanntmachung des Hinweises auf die Patenterteilung: **20.02.2008**
(21) Anmeldenummer: 03027955.8
(22) Anmeldetag: 04.12.2003
(51) Int. Cl.: E05B 65/12

(54) **Türaussengriff**
Outer door handle
Poignée extérieure de porte

(43) Veröffentlichungstag der Anmeldung: 08.06.2005
(73) Patentinhaber: Huf Hülsbeck & Fürst GmbH & Co. KG, 42551 Velbert (DE)
(72) Erfinder: Wölfl, Thomas, D-40723 Hilden (DE)
(74) Vertreter: Dallmeyer, Georg

(56) Entgegenhaltungen:
- WO-A-02/14636
- DE-A- 19 610 200
- DE-A- 19 936 956

## Beschreibung

Die Erfindung betrifft einen Türaußengriff für eine Schließeinrichtung eines Kraftfahrzeuges nach dem Oberbegriff des Anspruchs 1.

Ein derartiger Türaußengriff weist einen an der Fahrzeugtür befestigten Gehäuseteil und einen Griffbügel auf, der an dem Gehäuseteil an einem Ende mittels eines Lagerhebels um ein Festlager schwenkbar gelagert ist und an dem anderen Ende einen Betätigungshebel aufweist, der mit der Schließeinrichtung gekoppelt ist.

Es sind sogenannte Massensperren (DE 196 10 200 A) bekannt, mit denen verhindert werden kann, dass im Falle eines Seitenaufpralls gegen eine Fahrzeugtür aufgrund der auf den Griffbügel ausgeübten Beschleunigungen ein Verschwenken des Griffbügels und somit ein Öffnen der Tür erfolgt.

Bei einer derartigen Massensperre wird eine Masse derart angeordnet, dass sie im Crashfall ein Gegenmoment auf den Griffbügel oder ein mit dem Griffbügel verbundenes Teil ausübt, derart, dass aufgrund der Massenbeschleunigung kein Öffnen der Tür erfolgen kann.

Es hat sich allerdings herausgestellt, dass nicht nur die Massenbeschleunigung, sondern auch die Blechverformung zu einer unerwünschten Zwangsöffnung der Tür führen kann.

Der Erfindung liegt daher die Aufgabe zugrunde, einen Türaußengriff der eingangs genannten Art zu schaffen, bei dem es auch bei starken Blechverformungen nicht zu einer Öffnung der Tür bei einem Seitenaufprall kommen kann.

Zur Lösung dieser Aufgabe dienen die Merkmale des Anspruchs 1.

Die Erfindung sieht in vorteilhafter Weise vor, dass der Lagerhebel zum Verhindern des Öffnens der Tür bei einem Seitenaufprall bei einer Krafteinwirkung zwischen dem Gehäuseteil und dem Griffbügel nachgibt und damit verhindert, dass auf den Betätigungshebel nach außen wirkende Kräfte einwirken.

Bei einer Verformung der Tür kann sich das Türblech zwischen dem Gehäuseteil und dem Griffbügel so verformen, dass auf den Griffbügel eine Kraft ausgeübt wird, die den Griffbügel zu einer Öffnungsbewegung veranlasst. Nach der Erfindung ist in vorteilhafter Weise vorgesehen, dass der Lagerhebel bei einer Krafteinwirkung zwischen dem Gehäuseteil und dem Griffbügel nachgibt, so dass in einfacher Weise eine Öffnungsbewegung des Griffbügels, bei der der Betätigungshebel nach außen bewegt wird, verhindert wird.

Vorzugsweise ist vorgesehen, dass der Lagerhebel aus zwei gelenkig miteinander verbundenen Hebelteilen besteht.

Im Falle einer Krafteinwirkung aufgrund eines Seitenaufpralls, können die beiden Hebelteile des Lagerhebels gegeneinander verschwenken, so dass der Griffbügel sich auf der Festlagerseite nach außen bewegt und nicht auf der Seite des mit der Schließeinrichtung verbundenen Betätigungshebels.

Die gelenkig miteinander verbundenen Hebelteile können über ein auswerfbares Sperrelement in ihrer gegenseitigen Winkellage gehalten sein, wobei das Sperrelement bei Ausübung eines Drehmomentes auf die Hebelteile auswerfbar ist. Dieses Sperrelement ist für die Funktion des Lagerhebels nicht unbedingt notwendig, kann aber bei der Fertigung und Montage des Türaußengriffs von Vorteil sein, da die Lage der Hebelteile durch das Sperrelement fixiert ist.

Alternativ kann der Lagerhebel aus zwei über eine Sollbruchstelle verbundenen Hebelteilen bestehen.

Der Lagerhebel und der Betätigungshebel sind vorzugsweise in dem Griffbügel arretierbar. Dadurch das der Lagerhebel und der Betätigungshebel als separate Teile vorgesehen sind, die in den Griffbügel einsetzbar sind bzw. in dem Griffbügel arretierbar sind, können unterschiedliche Materialien für die Hebel und den Griffbügel verwendet werden. Der Griffbügel kann aus einem Spritzgießhohlteil bestehen. Durch die separate Fertigung des Lagerhebels und des Betätigungshebels entstehen keine größeren Materialanhäufungen an dem Ende des Griffbügels, was bei der Fertigung des Griffbügels als Spritzgießhohlteil vorteilhaft ist. Außerdem ist es beim Lackieren oder Verchromen des Griffbügels nicht erforderlich, fest angeformte Lagerhebel und Betätigungshebel abzukleben, so dass die Fertigung vereinfacht werden kann.

Im Folgenden wird unter Bezugnahme auf die Zeichnungen ein Ausführungsbeispiel näher erläutert. Es zeigen:
- Fig. 1: einen Türaußengriff in seiner normalen, unbetätigten Stellung,
- Fig. 2: eine Ansicht entlang der Linie II, II in Fig. 1,

- Fig. 3: den Türaußengriff bei einem Seitenaufprall gegen die Tür,
- Fig. 4: einen Querschnitt durch den im Griffbügel montierten Lagerhebel und
- Fig. 5: eine Seitenansicht des Lagerhebels.

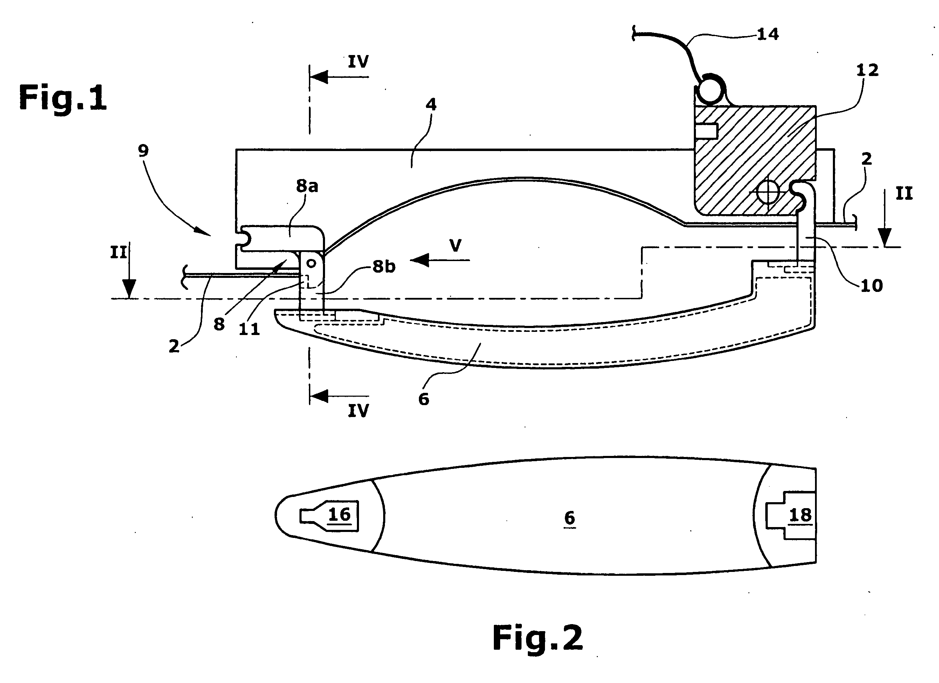

Der in Fig. 1 dargestellte Türaußengriff umfasst ein Gehäuseteil 4, das von innen an eine Tür 2 eines Fahrzeugs montiert ist. An dem einen Ende des Gehäuseteils 4 ist ein Griffbügel 6 an einem Festlager 9 gelenkig eingehakt, wobei an dem anderen Ende des Gehäuseteils 4 ein Betätigungshebel 10 des Griffbügels durch die Tür 2 hindurch in die Innenseite eingreift und mit einem Schwenkarm 12 gekoppelt ist, der um eine vertikale Achse schwenkbar ist. Wenn der Griffbügel nach außen gezogen wird, wird der Schwenkarm 12 ebenfalls verschwenkt, wobei ein in der Zeichnung nicht dargestelltes Schloss einer Schließeinrichtung über einen Seilzug 14 geöffnet wird, damit die Tür 2 des Fahrzeuges geöffnet werden kann. Der Schwenkarm 12, der im Falle eines Seitenaufpralls für einen Gegenmoment sorgen soll, ist nicht zwingend notwendig und hier nur beispielhaft dargestellt.

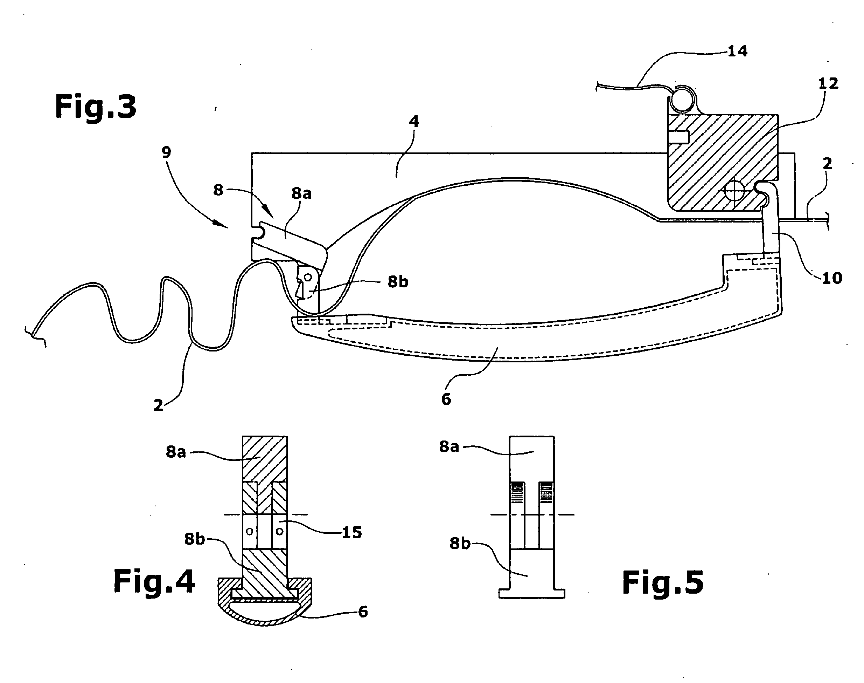

Wie am besten aus Fig. 3 ersichtlich, deformiert sich das Türblech der Tür 2 bei einem Seitenaufprall derart, dass der Griffbügel 6 durch die auftretenden Verformung der Tür 2 nach außen gedrückt wird.

Der Lagerhebel 8 ist zweiteilig ausgeführt und besteht aus zwei gelenkig miteinander verbundenen Hebelteilen 8a, 8b, die im Falle einer Krafteinwirkung gegeneinander verschwenken können, so dass die bei einem Seitenaufprall auftretenden Kräfte den Griffbügel 6 nicht auf der Seite des Betätigungshebels 10 sondern auf der Festlagerseite nach außen drücken. Auf diese Weise können keine so hohen Kräfte auf den Betätigungshebel 10 ausgeübt werden, dass dieser die Tür 2 bei einem Seitenaufprall öffnen kann.

Der Lagerhebel 8 kann mit einem Sperrelement 11 versehen sein, das in einer Aussparung 15 (Fig. 4) sitzt. Das Sperrelement 11 hat die Aufgabe, die beiden Hebelteile 8a, 8b des Lagerhebels 8 in ihrer Position zu halten. Dies ist beispielsweise bei der Montage vorteilhaft, wenn die beiden Hebelteile 8a, 8b des Lagerhebels 8 nicht allein aufgrund von Reibung in ihrer Winkellage gehalten werden.

Im Falle eines Seitenaufpralls wird das Sperrelement 11 durch einen Auswerfer 13 des Hebelteils 8a ausgeworfen.

Wenn die Lage der Hebelteile 8a und 8b zueinander beispielsweise durch Reibschluss genügend fixiert ist, ist ein Sperrelement nicht erforderlich.

Der Griffbügel 6 besteht vorzugsweise aus einem Spritzgußhohlteil, das im Gasinnendruckverfahren hergestellt wird. Dabei ist es besonders vorteilhaft, dass der Lagerhebel 8 und der Betätigungshebel 10 als separate Teile in den Griffbügel 6 mit Hilfe der Aussparungen 16, 18 in Griffbügel 6 einsetzbar ist. Dadurch ist es möglich für den Lagerhebel 8 und den Betätigungshebel 10 von dem Material des Griffbügels 6 verschiedene Materialien zu verwenden. Außerdem wird bei der Herstellung des Griffbügels 6 vermieden, dass an den Enden des Griffbügels Materialanhäufungen existieren, die bei der Fertigung eines Spritzgußhohlteils Schwierigkeiten bereiten können.

Außerdem ist das Lackieren und Verchromen des Griffbügels vereinfacht, weil der Lagerhebel 8 und der Betätigungshebel 10 nicht abgeklebt werden müssen.

## Patentansprüche

1. Türaußengriff für eine Schließeinrichtung eines Kraftfahrzeuges mit einem an einer Tür (2) befestigten Gehäuseteil (4) und einem Griffbügel (6), der in dem Gehäuseteil (4) an einem Ende mittels eines Lagerhebels (8) um ein Festlager (9) schwenkbar gelagert ist und an dem anderen Ende einen Betätigungshebel (10) aufweist, der mit der Schließeinrichtung Koppelbar ist,
**dadurch gekennzeichnet,**
**dass** der Lagerhebel (8) zum Verhindern des Öffnen der Tür (2) bei einem Seitenaufprall infolge einer Krafteinwirkung zwischen dem Gehäuseteil (4) und dem Griffbügel (6) nachgibt und damit verhindert, dass auf den Betätigungshebel (10) nach außen wirkende Kräfte einwirken.

2. Türaußengriff nach Anspruch 1, **dadurch gekennzeichnet, dass** der Lagerhebel (8) aus zwei gelenkig miteinander verbundenen Teilen (8a, 8b) besteht.

3. Türaußengriff nach Anspruch 2, **dadurch gekennzeichnet, dass** die gelenkig miteinander verbundenen Hebelteile (8a, 8b) über ein auswerfbares Sperrelement (11) in der gegenseitigen Winkellage gehalten sind, wobei bei Ausübung eines Drehmomentes auf den Lagerhebel (8) das Sperrelement (11) auswerfbar ist.

4. Türaußengriff nach Anspruch 1, **dadurch gekennzeichnet, dass** ein Lagerhebel (8) aus zwei über eine Sollbruchstelle verbundenen Hebelteilen besteht.

5. Türaußengriff nach einem der Ansprüche 1 bis 4, **dadurch gekennzeichnet, dass** der Lagerhebel (8) und der Betätigungshebel (10) mit dem Griffbügel (6) koppelbar sind.

6. Türaußengriff nach einem der Ansprüche 1 bis 5, **dadurch gekennzeichnet, dass** der Griffbügel (6) aus einem Spritzgußhohlteil besteht.

## Claims

1. Outer door handle for a locking device of a motor vehicle, comprising a housing part (4) mounted to a door (2) and a handle bracket (6) supported at one end in the housing part (4) for pivotal movement by a lever (8) about a fixed bearing (9) and having its other end provided with an actuating lever (10) adapted to be coupled with the locking means,
**characterized in that**
to prevent the door (2) from being opened in the event of a lateral collision, the lever (8) yields due to the action of a force between the housing part (4) and the handle bracket (6), thereby preventing outward directed forces from acting on the actuating lever (10).

2. The outer door handle of claim 1, **characterized in that** the lever (8) is made up of two articulately connected parts (8a, 8b).

3. The outer door handle of claim 2, **characterized in that** the articulately connected lever parts (8a, 8b) are maintained in their respective angular positions by means of an ejectable blocking element (11), wherein the blocking element (11) is adapted to be ejected upon the exertion of a torque on the lever (8).

4. The outer door handle of claim 1, **characterized in that** the lever (8) is formed by two lever parts connected by a weak link.

5. The outer door handle of one of claims 1 to 4, **characterized in that** the lever (8) and the actuating lever (10) are adapted to be coupled with the handle bracket (6).

6. The outer door handle of one of claims 1 to 5, **characterized in that** the handle bracket (6) is formed by an injection molded hollow part.

## Revendications

1. Poignée extérieure de porte pour un dispositif de fermeture d'un véhicule automobile, comprenant une pièce de carter (4) fixée sur une porte (2) et une anse de poignée (6) qui est montée dans la pièce de carter (4) en pouvant pivoter, au niveau d'une extrémité, autour d'un palier fixe (9), au moyen d'un levier palier (8), et présente, au niveau de l'autre extrémité, un levier d'actionnement (10) qui peut être couplé au dispositif de fermeture,
**caractérisée en ce que** le levier palier (8), pour empêcher l'ouverture de la porte (2) dans le cas d'un choc latéral, fléchit suite à l'effet d'une force se produisant entre la pièce de carter (4) et l'anse (6) de la poignée, et empêche ainsi que des forces agissant vers l'extérieur ne s'exercent sur le levier d'actionnement (10).

2. Poignée extérieure de porte selon la revendication 1,
**caractérisée en ce que** le levier palier (8) se compose de deux pièces (8a, 8b) reliées entre elles de façon articulée.

3. Poignée extérieure de porte selon la revendication 2,
**caractérisée en ce que** les pièces (8a, 8b) du levier reliées entre elles de façon articulée sont maintenues dans la position angulaire réciproque par un élément de blocage (11) éjectable étant entendu que, lorsqu'un couple s'exerce sur le levier palier (8), l'élément de blocage (11) est éjectable.

4. Poignée extérieure de porte selon la revendication 1,
**caractérisée en ce qu'**un levier palier (8) se compose de deux pièces de levier reliées par une zone destinée à la rupture.

5. Poignée extérieure de porte selon l'une quelconque des revendications 1 à 4, **caractérisée en ce que** le levier palier (8) et le levier d'actionnement (10) peuvent être couplés à l'anse (6) de la poignée.

6. Poignée extérieure de porte selon l'une quelconque des revendications 1 à 5, **caractérisée en ce que** l'anse (6) de la poignée se compose d'une partie creuse moulée par injection.
